# EUROPEAN PATENT APPLICATION

(11) **EP 3 594 868 A1**
(43) Date of publication of application: **15.01.2020**
(21) Application number: 18763164.3
(22) Date of filing: 27.02.2018
(51) Int. Cl.: G06Q 10/00, G06Q 50/30

(54) **TIRE ROTATION SUGGESTION APPARATUS AND TIRE ROTATION SUGGESTION METHOD**

(30) Priority: 07.03.2017 JP 2017042764
(71) Applicant: Bridgestone Corporation, Tokyo 104-8340 (JP)
(72) Inventor: UKEGAWA, Yasuhiro, Chuo-Ku Tokyo 104-8340 (JP); YAMAMOTO, Yukiko, Chuo-Ku Tokyo 104-8340 (JP); YASUI, Hitoshi, Chuo-Ku Tokyo 104-8340 (JP); GOTO, Shiina, Chuo-Ku Tokyo 104-8340 (JP)
(74) Representative: Oxley, Robin John George
(86) International application number: PCT/JP2018/007151
(87) International publication number: WO 2018/163901

(57) **Abstract**

A tire position exchange proposal device calculates an inclination of degradation degree of tires per mounted position (S01), calculates a degree of degradation of each tire in the first maintenance period according to a variation in degradation degree (S05), calculates a degree of degradation of each tire in the second maintenance period for different tire position exchange patterns when a positional exchange of the tires is performed in the first maintenance period (S11), selects a maximum degree of degradation from the degrees of degradation of the tires in the second maintenance period for each of the tire position exchange patterns, and selects a tire position exchange pattern to be proposed to a user in which the maximum degree of degradation is smaller than a reference value (S17).

## Description

### TECHNICAL FIELD

The present invention relates to a tire position exchange proposal device and a tire position exchange proposal method of proposing a positional exchange between tires at a time conforming to a period of maintenance of a vehicle.

### BACKGROUND ART

A vehicle management system is known that manages conditions of use of tires, for example (refer to Patent Document 1). Patent Document 1 discloses that a possible traveling distance, which is a remaining service life, until tires reach the limit of usage is estimated according to initial setting data and inspection result data upon regular inspection of a vehicle. Such estimation facilitates planning for a period of tire rotation with sufficient time left according to the remaining service life.

### CITATION LIST

### PATENT LITERATURE

Patent Document 1: Japanese Unexamined Patent Application Publication No. 2002-32470

### SUMMARY OF INVENTION

The system disclosed in Patent Document 1 is effective when a period of maintenance of a vehicle is not determined. A period of maintenance of a vehicle is, however, sometimes preliminarily determined regardless of a remaining service life of tires. In order to prevent an increase in downtime of a vehicle, a positional exchange (rotation) of tires is preferably carried out at a time conforming to a predetermined period of maintenance of the vehicle.

To solve the conventional problems described above, the present invention provides a tire position exchange proposal device and a tire position exchange proposal method capable of proposing a positional exchange between tires at a time conforming to a period of maintenance of a vehicle so as to avoid an increase in downtime of the vehicle.

A tire position exchange proposal device according to an aspect of the present invention includes a memory storing a first maintenance period which is earliest among periods in which maintenance of a vehicle is presumed to be performed and a second maintenance period which is second earliest after the first maintenance period, and a controller. The controller calculates a variation in degradation degree of a plurality of tires mounted to the vehicle per unit time for individual mounted positions of the tires, reads out the first maintenance period from the storage means and calculates a degree of degradation of the respective tires in the first maintenance period in accordance with the variation in degradation degree, reads out the second maintenance period from the storage means and calculates a degree of degradation of the respective tires in the second maintenance period in accordance with the variation in degradation degree and the degree of degradation of the respective tires in the first maintenance period when a positional exchange of the tires is performed in the first maintenance period, performs the calculation of the degree of degradation of the respective tires in the second maintenance period for individual tire position exchange patterns, selects a maximum degree of degradation from the degrees of degradation of the tires in the second maintenance period for each of the tire position exchange patterns, and selects a tire position exchange pattern to be proposed to a user in which the maximum degree of degradation is smaller than a reference value, from the plural tire position exchange patterns.

### BRIEF DESCRIPTION OF DRAWINGS

[Fig. 1] Fig. 1 is a block diagram showing an example of a configuration of a computer which functions as a tire position exchange proposal device when a computer program according to an embodiment is installed and executed.
[Fig. 2] Fig. 2 is a block diagram showing a functional configuration of a CPU 10 shown in Fig. 1.
[Fig. 3A] Fig. 3A is a flowchart showing a former half of an operation of the tire position exchange proposal device shown in Fig. 1 and Fig. 2.
[Fig. 3B] Fig. 3B is a flowchart showing a latter half of the operation of the tire position exchange proposal device shown in Fig. 1 and Fig. 2.
[Fig. 4] Fig. 4 is a flowchart showing an operating process according to modified example 1.
[Fig. 5] Fig. 5 is a flowchart showing an operating process according to modified example 2.
[Fig. 6] Fig. 6 is a flowchart showing an example of a specific process in step S01 shown in Fig. 3A.
[Fig. 7] Fig. 7 is a flowchart showing another example of the specific process in step S01 shown in Fig. 3A.
[Fig. 8A] Fig. 8A is a graph showing an example of a change in degradation of tires (Tr1 to Tr3) over a passage of time according to a first embodiment.
[Fig. 8B] Fig. 8B is a graph showing an example of a change in degradation of tires (Tr1 to Tr3) over a passage of time according to a second embodiment.
[Fig. 9A] Fig. 9A is a schematic view showing an example of mounted positions (P1 to P8) of tires of a towing vehicle.
[Fig. 9B] Fig. 9B is a table showing an example of inclination of degradation degrees for mounted positions (P1 to P8) shown in Fig. 9A.
[Fig. 10] Fig. 10 is a schematic diagram showing, in a time series, various kinds of data generated through a process of information processing executed by the CPU 10 shown in Fig. 1.

### DESCRIPTION OF EMBODIMENTS

Hereinafter, embodiments will be described in detail with reference to the drawings.

### <First Embodiment>

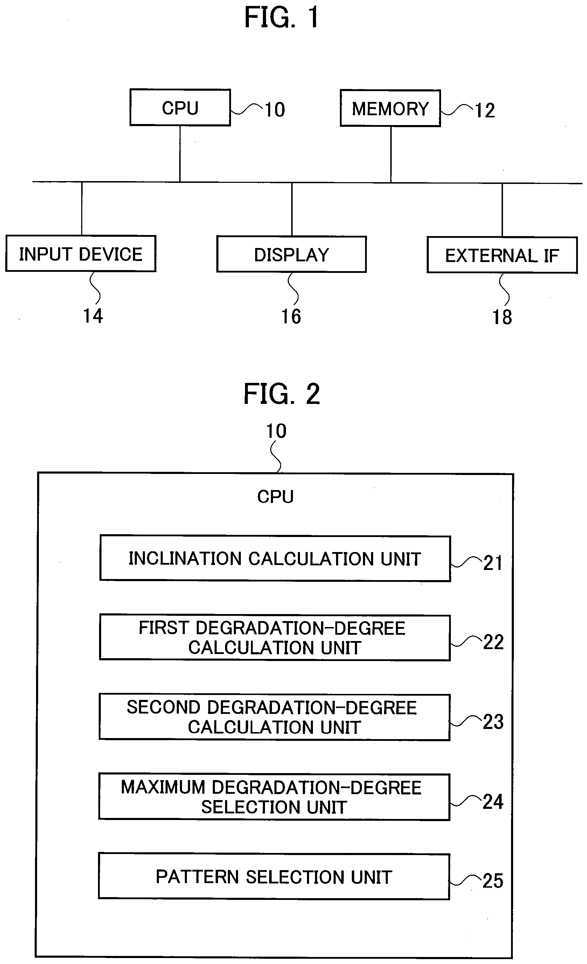

An example of a configuration of a computer which functions as a "tire position exchange proposal device" when a computer program according to the present embodiment is installed and executed, is described below with reference to Fig. 1.

The computer includes, as hardware resources, a controller serving as calculation means for executing processing of various kinds of information, a memory 12 serving as storage means, such as a ROM or a RAM, for storing various kinds of information, an input device 14 including a keyboard, a mouse, or a magnetic or optical drive, a display 16 serving as display means for displaying various kinds of information, and an external interface (IF) 18 for connecting external devices such as a network interface, a flash memory, and a speaker. The controller is a CPU (central processing unit) 10, for example.

The computer is a general-purpose computer including the CPU 10, the memory 12, the input device 14, the display 16, and the external IF 18. A computer program (a tire position exchange proposal program) is installed in the computer so as to cause the computer to function as the tire position exchange proposal device, and is stored in the memory 12 such as a ROM. The computer program is read out from the memory 12, so that the CPU 10 functions as a plurality of information processing circuits (21 to 25, refer to Fig. 2) included in the tire position exchange proposal device. While the present embodiment is illustrated with the case in which the software is installed to fabricate the plural information processing circuits (21 to 25) included in the controller of the tire position exchange proposal device, it should be understood that dedicated hardware for executing each information processing as described below can be prepared to compose the information processing circuits (21 to 25). The respective information processing circuits (21 to 25) may be composed of individual hardware. The controller includes individual hardware for fabricating the respective information processing circuits (21 to 25). While the computer is not necessarily mounted on the vehicle, part of the components in the computer such as the information processing circuits (21 to 25) and the display 16 may be mounted on the vehicle, or may also serve as an electronic control unit (ECU) used for other control processing in the vehicle. The tire position exchange proposal program may be stored in a storage medium which can be read out by the computer.

The computer (the tire position exchange proposal device) shown in Fig. 1 proposes, to a user of a vehicle, a positional exchange between a plurality of tires mounted to the vehicle at a time conforming to a period presumed to undergo maintenance of the vehicle, by use of the various types of functional means described below.

The memory 12 stores presumed periods for undergoing maintenance of the vehicle. The memory 12 stores at least the first maintenance period closest to the current point of time, among the presumed periods, and the second maintenance period second closest to the current point of time after the first maintenance period. The memory 12 thus stores at least two latest maintenance periods.

The CPU 10 includes, as the plural information processing circuits (21 to 25), an inclination calculation unit (variation calculation means) 21, a first degradation-degree calculation unit 22, a second degradation-degree calculation unit 23, a maximum degradation-degree selection unit 24, and a pattern selection unit (pattern selection means) 25.

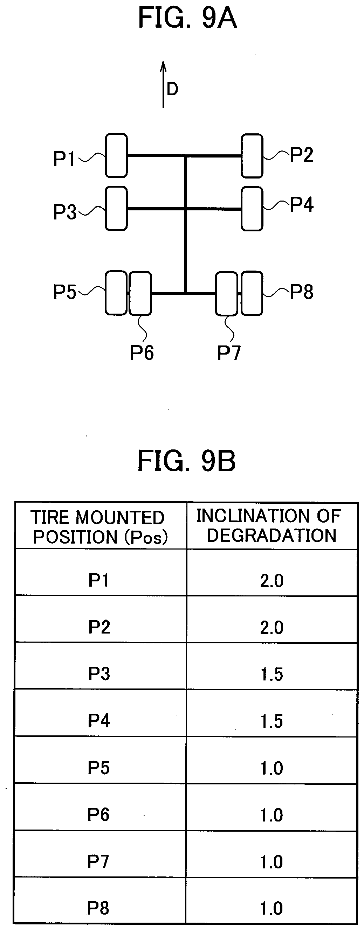

The inclination calculation unit 21 calculates a variation in degradation degree (hereinafter referred to as an "inclination of degradation degree") of the plural tires mounted to the vehicle per unit time for each mounted position of the tires. Fig. 9A illustrates a case in which the vehicle is a towing vehicle including a tractor and a trailer, for example. The vehicle includes, from the front side in the traveling direction D, two steering wheels (P1 and P2) of the tractor, two driving wheels (P3 and P4) of the tractor, and four wheels (P5 to P8) of the trailer.

The inclination of the degradation degree of the respective tires mounted typically varies depending on the mounted position (P1 to P8) of the tires. The positional exchange (rotation) between the tires is carried out in the middle of the in-use period of the tires, so as to equalize an advance in degradation between the tires mounted to the vehicle to entirely extend the life of the tires. The inclination calculation unit 21 calculates the inclination of the degradation degree for each mounted position of the tires.

According to the first embodiment, the inclination calculation unit 21 calculates the inclination of the degradation degree in accordance with a history of internal pressures and a history of temperatures during the use of the tires for a predetermined evaluation period. For example, in the towing vehicle shown in Fig. 9A, the inclination calculation unit 21 calculates the inclination of the degradation degree for each mounted position (P1 to P8) shown in Fig. 9B in accordance with various kinds of information (pressure and temperature in a pneumatic chamber) obtained from the respective tires during the evaluation period. The values shown in Fig. 9B are relative values when the inclination of the degradation degree at the mounted positions P5 to P8 in the trailer is set to 0.1.

The predetermined evaluation period is a period set for evaluating market severity (inclination of degradation degree), and is preliminarily determined depending on the type of tire or vehicle. The evaluation period can be optionally set by the user.

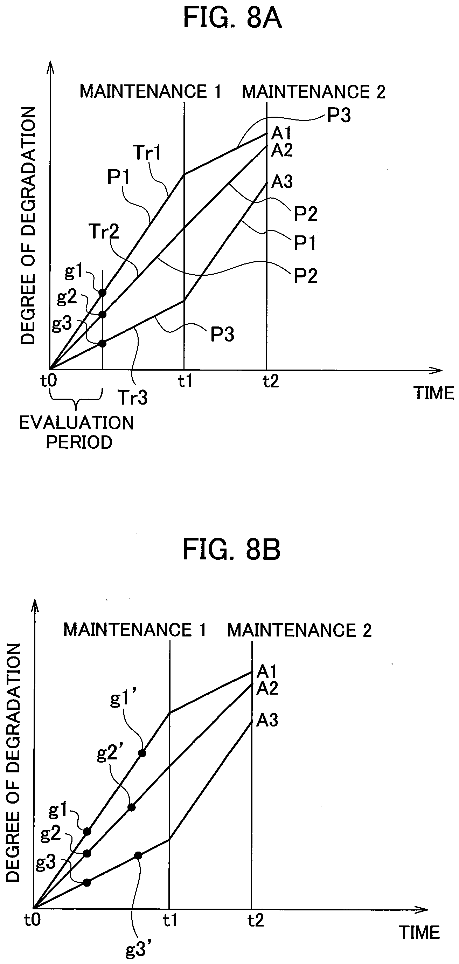

The first degradation-degree calculation unit 22 reads out the first maintenance period from the memory 12, and calculates the degree of degradation of the respective tires in the first maintenance period in accordance with the variation in degradation degree. For example, as shown in Fig. 8A, the inclination calculation unit 21 calculates the degrees of degradation (g1, g2, and g3) at a point after the lapse of the evaluation period from the in-use start time (t0) of the tires (new) in accordance with the various kinds of information, so as to calculate three types of inclination of the degradation degrees varying at the mounted positions of the tires. The various kinds of information include the history of pressures and the history of temperatures in the pneumatic chamber during the use of the respective tires, and a history of loads acting on the tires. The first degradation-degree calculation unit 22 elongates a line segment of the inclination of the respective degradation degrees to calculate the degree of degradation of the respective tires in the first maintenance period (maintenance 1).

Fig. 8A illustrates an example in which a tire Tr1 is mounted at a mounted position P1, a tire Tr2 is mounted at a mounted position P2, and a tire Tr3 is mounted at a mounted position P3 during the period from the in-use start time (t0) to the first maintenance period (maintenance 1). The inclination of the degradation degree varies depending on the mounted position (P1 to P3). The degree of degradation of the respective tires (Tr1 to Tr3) in the first maintenance period thus varies.

The second degradation-degree calculation unit 23 reads out the second maintenance period (maintenance 2) from the memory 1. The second degradation-degree calculation unit 23 calculates the degree of degradation of the respective tires (Tr1 to Tr3) in the second maintenance period (maintenance 2) when the mounted positions (P1 to P3) of the tires (Tr1 to Tr3) are exchanged in the first maintenance period (maintenance 1). The exchange of the mounted positions (P1 to P3) between the tires (Tr1 to Tr3) in the first maintenance period (maintenance 1) leads to a change in the inclination of the degradation degrees of the tires (Tr1 to Tr3) after the first maintenance period (maintenance 1). The second degradation-degree calculation unit 23 calculates the degree of degradation of the respective tires (Tr1 to Tr3) in the second maintenance period (maintenance 2) in accordance with the inclination of the degradation degree of the respective tires (Tr1 to Tr3) after the mounted positions (P1 to P3) are exchanged, and the degree of degradation of the respective tires (Tr1 to Tr3) in the first maintenance period (maintenance 1).

There are several patterns (tire position exchange patterns) for executing the positional exchange (rotation) between the tires (Tr1 to Tr3) in the first maintenance period (maintenance 1). Fig. 8A illustrates an example in which the mounted position P1 of the tire Tr1 and the mounted position P3 of the tire Tr3 are exchanged, and the position P2 of the tire Tr2 remains the same. In the case illustrated in Fig. 8A, the second degradation-degree calculation unit 23 calculates the degrees of degradation (A1, A2, and A3) of the tires (Tr1 to Tr3) in the second maintenance period (maintenance 2).

The second degradation-degree calculation unit 23 calculates the degree of degradation of the respective tires (Tr1 to Tr3) in the second maintenance period (maintenance 2) for each of the different tire position exchange patterns. The second degradation-degree calculation unit 23 calculates the degree of degradation of the respective tires (Tr1 to Tr3) in the second maintenance period (maintenance 2) for the following tire position exchange patterns, in addition to the tire position exchange pattern shown in Fig. 8A.
(1) Tire position exchange pattern in which the mounted position P1 of the tire Tr1 and the mounted position P2 of the tire Tr2 are exchanged, and the position P3 of the tire Tr3 remains the same
(2) Tire position exchange pattern in which the mounted position P2 of the tire Tr2 and the mounted position P3 of the tire Tr3 are exchanged, and the position P1 of the tire Tr1 remains the same
(3) Tire position exchange pattern in which the tire Tr1 is shifted to the mounted position P2, the tire Tr2 is shifted to the position P3, and the tire Tr3 is shifted to the position P1
(4) Tire position exchange pattern in which the tire Tr3 is shifted to the mounted position P2, the tire Tr2 is shifted to the position P1, and the tire Tr1 is shifted to the position P3

The maximum degradation-degree selection unit 24 selects the maximum degree of degradation from the degrees of degradation of the tires in the second maintenance period for each of the tire position exchange patterns. For example, in the pattern shown in Fig. 8A, the degree of degradation A1 of the tire Tr1, which is the maximum degree of degradation, is selected from the degrees of degradation (A1 to A3) of the tires (Tr1 to Tr3). Similarly, the maximum degree of degradation is selected from the degrees of degradation of the tires (Tr1 to Tr3) for each of the other patterns (1) to (4) described above.

The pattern selection unit 25 selects, from the different tire position exchange patterns, the tire position exchange pattern to be proposed to the user in which the maximum degree of degradation is smaller than a reference value. The rotation of the tires carried out in the first maintenance period preferably uses the pattern in which the maximum degree of degradation in the second maintenance period is small. The reason for this is that the advance in degradation can be equalized between the tires mounted to the vehicle in the second maintenance period. The pattern selection unit 25 thus selects the tire position exchange pattern to be proposed to the user in which the maximum degree of degradation is smaller than the predetermined reference value.

The "reference value" may be optionally determined by the user, or may be determined depending on the time between the in-use start time (t0) and the second maintenance period (maintenance 2). The reference value may also be calculated while taking account of the various kinds of information obtained from the tires during the evaluation period.

Alternatively, the pattern selection unit 25 may select, from the plural tire position exchange patterns, the tire position exchange pattern to be proposed to the user in which the maximum degree of degradation is the smallest. For example, the pattern selection unit 25 can program the "reference value" so as to be automatically updated. In particular, the pattern selection unit 25 compares the maximum degrees of degradation of the two tire position exchange patterns optionally chosen, and updates the lower degree of degradation as the reference value. The comparison processing and the update processing regarding the reference value are performed for the plural tire position exchange patterns, so that the pattern selection unit 25 can select, from the respective tire position exchange patterns, the tire position exchange pattern to be proposed to the user in which the maximum degree of degradation is the smallest.

Alternatively, the "reference value" may be set to a limited degree of degradation inherent in tires. When the degree of degradation exceeds the limited degree of degradation, the replacement of the tires or the recycle (reuse) of the tires such as retreading, regrooving, or re-siding can be proposed. For example, when the pattern selection unit 25 cannot select any tire position exchange pattern in which the maximum degree of degradation is smaller than the reference value, the pattern selection unit 25 can propose, to the user, the replacement of the tires or the recycle of the tires in the first maintenance period (maintenance 1).

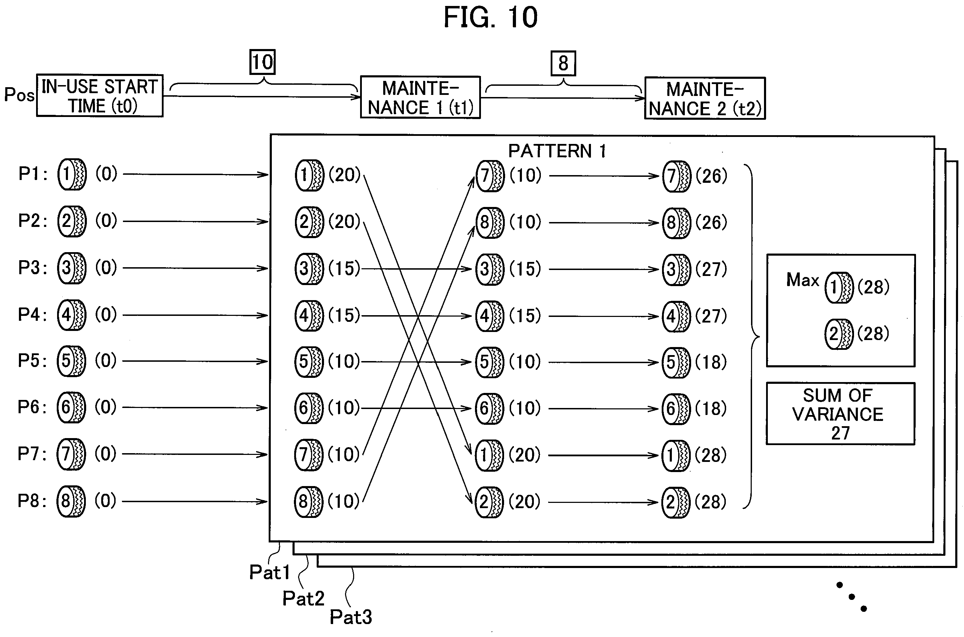

Fig. 10 is a schematic diagram showing the various kinds of information in a time series, generated in the process of the information processing executed by the CPU 10 described above. The diagram of Fig. 10 is presumed that the inclination of the degradation degree as shown in Fig. 9B is calculated for the respective tire mounted positions (P1 to P8) of the towing vehicle shown in Fig. 9A. The sign "Pos" refers to the mounted positions (P1 to P8) of the tires, and the values in parentheses indicated on the right side of the illustrations of the tires with the numbers 1 to 8 refer to the "degree of degradation".

At the in-use start time (t0), the tires (1 to 8) are mounted at the corresponding mounted positions (P1 to P8), and the degree of degradation of the respective tires (1 to 8) is "zero", meaning that all of the tires are new. The length of period from the in-use start time (t0) to the first maintenance period (maintenance 1) is set to "10", and the length of period from the first maintenance period (maintenance 1) to the second maintenance period (maintenance 2) is set to "8".

The first degradation-degree calculation unit 22 calculates the degree of degradation of the respective tires in the first maintenance period by multiplying the inclination of each degradation degree listed in Fig. 9B by the length of period ("10") from the in-use start time (t0) to the first maintenance period (maintenance 1). The degrees of degradation of the tires 1 and 2 result in "20", the degrees of degradation of the tires 3 and 4 result in "15", and the degrees of degradation of the tires 5 to 8 result in "10".

Fig. 10 shows "pattern 1", as one of the tire rotation patterns, in which the positions of the tires having the greatest degree of degradation are exchanged with the positions of the tires having the smallest degree of degradation in the first maintenance period (maintenance 1). In particular, in pattern 1, the mounted positions P1 and P2 of the tires 1 and 2 are exchanged with the mounted positions P7 and P8 of the tires 7 and 8, and the mounted positions P3 to P6 of the tires 3 to 6 remain the same.

The second degradation-degree calculation unit 23 calculates the degree of degradation of the respective tires (1 to 8) in the second maintenance period (maintenance 2) when the tire rotation in pattern 1 is performed. The second degradation-degree calculation unit 23 adds the degree of degradation of the respective tires in the first maintenance period (maintenance 1) to a value obtained by multiplying the inclination of each degradation degree listed in Fig. 9B by the length of period ("8") from the first maintenance period (maintenance 1) to the second maintenance period (maintenance 2). For example, with regard to the tire 7, the degree of degradation ("10") in the first maintenance period is added to the value ("16") obtained by multiplying the inclination of the degradation degree ("2.0") at the mounted position P1 by the length of period ("8"). The degree of degradation of the tire 7 in the second maintenance period (maintenance 2) thus results in "26". Fig. 10 shows the other degrees of degradation calculated for the other tires in the same manner.

Although not shown in Fig. 10, the second degradation-degree calculation unit 23 further calculates the degree of degradation of the respective tires (1 to 8) in the second maintenance period (maintenance 2) for the other tire position exchange patterns (Pat2, Pat3, ...) in the same manner as pattern 1 (Pat1).

The maximum degradation-degree selection unit 24 selects the maximum degree of degradation (Max) for each of the tire position exchange patterns (Pat1, Pat2, Pat3, ...). For example, in pattern 1 (Pat1) shown in Fig. 10, the degree of degradation ("28") of the tires 1 and 2 is selected as the maximum degree of degradation (Max).

The maximum degradation-degree selection unit 24 may further calculate the sum of the variances in the degrees of degradation of the tires in the second maintenance period (maintenance 2). The maximum degradation-degree selection unit 24 may calculate the sum of the variances in the degrees of degradation of the respective tires (1 to 8) in each of pattern 1 (Pat1) shown in Fig. 10 and the other patterns (Pat2, Pat3, ...), for example.

The pattern selection unit 25 selects the pattern, from the plural tire position exchange patterns (Pat1, Pat2, Pat3, ...), in which the maximum degree of degradation is smaller than the reference value, and outputs the selected pattern to the display 16 or the external IF 18. The tire position exchange proposal device thus can propose the selected tire position exchange pattern to the user via the display 16 or the external IF 18.

The pattern selection unit 25 may further select the tire position exchange pattern in which the variance in the degrees of degradation of the tires in the second maintenance period is smaller than a threshold, from the patterns selected in accordance with the maximum degree of degradation (Max) described above. Namely, the tire position exchange pattern to be proposed to the user may be selected not only by filtering based on the maximum degree of degradation (Max), but also by filtering based on the variance in the degrees of degradation. Alternatively, the pattern selection unit 25 may select the tire position exchange pattern in which the variance in the degrees of degradation is the smallest, from the patterns selected in accordance with the maximum degree of degradation (Max) described above.

As used herein, the expression "variance in the degrees of degradation" refers to a level of scattering of the degrees of degradation of the plural tires targeted for the rotation, and is calculated in accordance with a difference between a predetermined reference degree of degradation and the degree of degradation of the respective tires. For example, the variance in the degrees of degradation of the tires can be calculated from the sum of absolute values of differences between the reference degree of degradation and the respective degrees of degradation of the tires. The predetermined reference degree of degradation is a reference value for calculating the variance, which may be an average value of the degrees of degradation of the tires, or may be optionally determined by the user. The term "variance" should encompass not only "variation" and "standard deviation" used in probability theory and statistics, but also any indicators equivalent thereto indicating how samples are scattered about a sample reference.

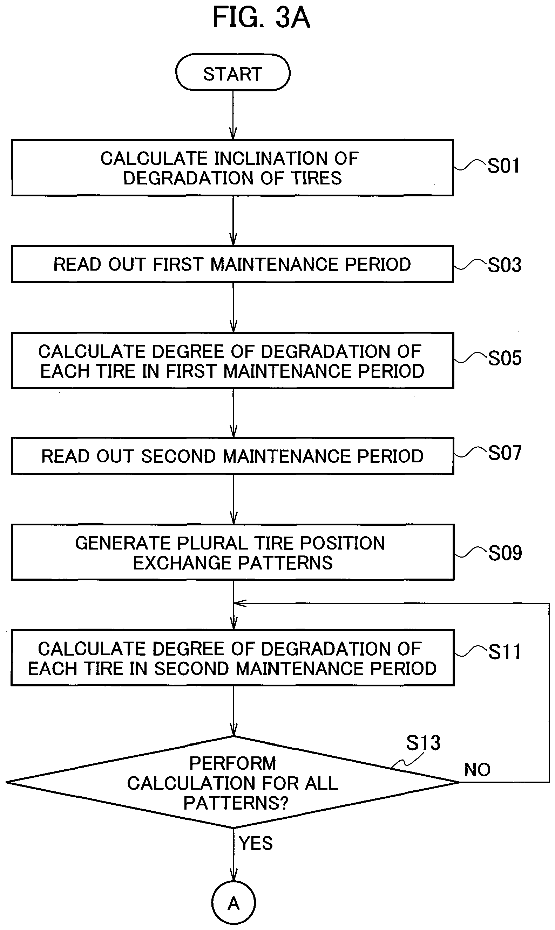

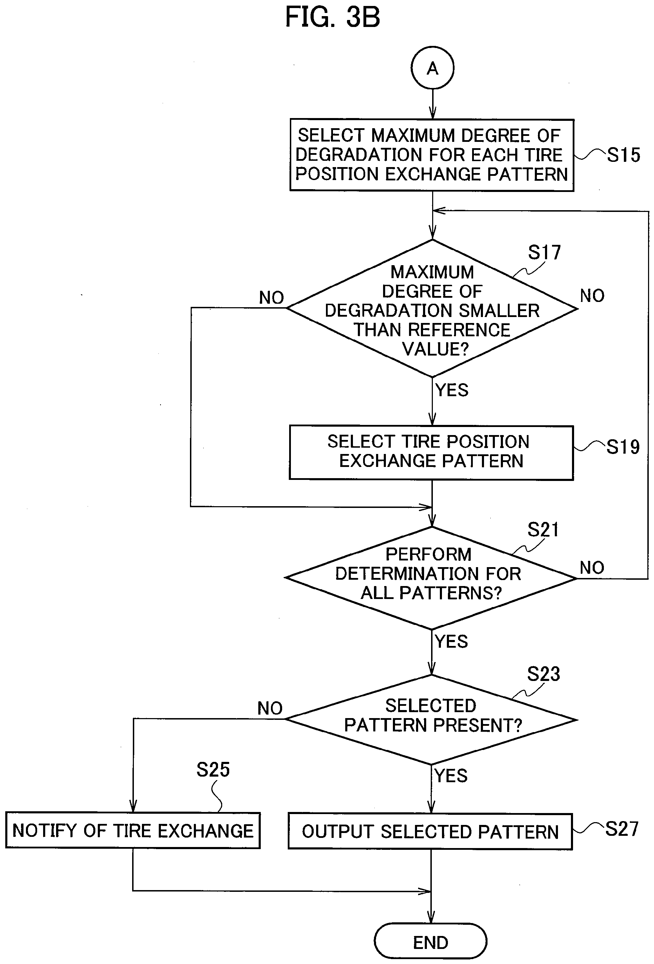

An example of a tire position exchange proposal method using the tire position exchange proposal device shown in Fig. 1 and Fig. 2 is described below with reference to Fig. 3A and Fig. 3B. In particular, a series of specific calculation processing steps when the computer executes the tire position exchange proposal program installed in the computer shown in Fig. 1, is described below with reference to the flowcharts shown in Fig. 3A and Fig. 3B.

First, in step S01 shown in Fig. 3A, the inclination calculation unit 21 calculates the inclination of the degradation degree of the respective tires mounted to the vehicle (Fig. 9A) per unit time for each mounted position (P1 to P8) of the tires. The calculation results (Fig. 9B) obtained by the inclination calculation unit 21 are temporarily stored in the memory 12 such as a RAM.

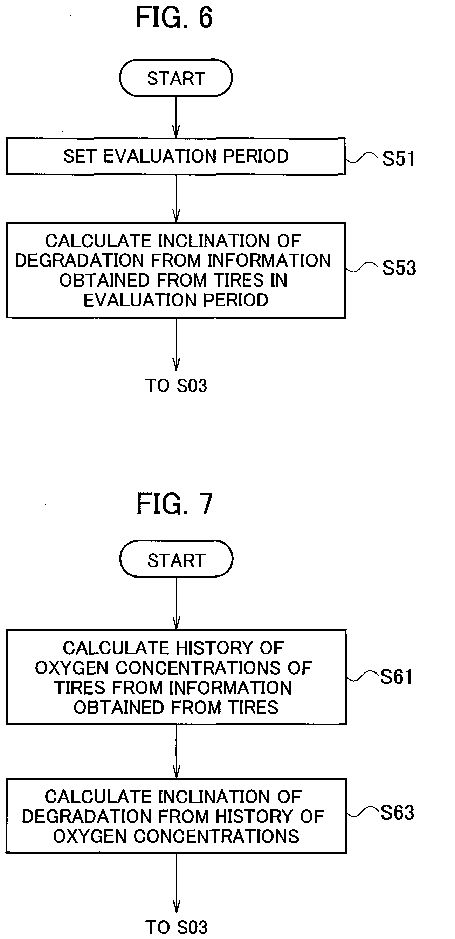

The process in step S01 according to the first embodiment is executed by the following specific steps shown in Fig. 6. In step S51 in Fig. 6, the inclination calculation unit 21 reads out the data indicating the evaluation period preliminarily set by the user from the memory 12. The process proceeds to step S53, and the inclination calculation unit 21 calculates the inclination of the respective degradation degrees listed in Fig. 9B in accordance with the history of internal pressures and the history of temperatures during the use of the tires for the predetermined evaluation period.

Returning to Fig. 3A, the process proceeds to step S03, and the first degradation-degree calculation unit 22 reads out the first maintenance period from the memory 12. The process proceeds to step S05, and the first degradation-degree calculation unit 22 calculates the degree of degradation of the respective tires in the first maintenance period (maintenance 1) by multiplying the inclination of the respective degradation degrees listed in Fig. 9B by the length of period ("10") from the in-use start time (t0) to the first maintenance period (maintenance 1). The calculation results obtained by the first degradation-degree calculation unit 22 are temporarily stored in the memory 12 such as a RAM.

The process proceeds to step S07, and the second degradation-degree calculation unit 23 reads out the second maintenance period from the memory 12. The process proceeds to step S09, and the second degradation-degree calculation unit 23 generates different kinds of tire position exchange patterns. For example, the second degradation-degree calculation unit 23 generates five tire position exchange patterns including the pattern shown in Fig. 8A and the other patterns (1) to (4) described above. The number of the tire position exchange patterns generated varies depending on the number of tires, and the number of mounted positions of tires differing in the degree of degradation. For example, the number of the mounted positions differing in the degree of degradation in the case shown in Fig. 9B is three. The second degradation-degree calculation unit 23 generates all tire position exchange patterns having an influence on the degree of degradation of the tires in the second maintenance period.

The process proceeds to step S11, and the second degradation-degree calculation unit 23 calculates the degree of degradation of the respective tires in the second maintenance period (maintenance 2) when the mounted positions of the tires are exchanged in the first maintenance period (maintenance 1). The process proceeds to step S13, and the second degradation-degree calculation unit 23 determines whether the process in step S11 is performed on all of the tire position exchange patterns generated in step S09. When the calculation of the degree of degradation is performed on all of the tire position exchange patterns (YES in step S13), the process proceeds to step S15 shown in Fig. 3B. In step S15, the maximum degradation-degree selection unit 24 selects the maximum degree of degradation (Max) for each of the tire position exchange patterns.

The process proceeds to step S17, and the pattern selection unit 25 determines whether the maximum degree of degradation (Max) selected in step S15 is smaller than the reference value, and selects only the pattern in which the maximum degree of degradation (Max) is smaller than the reference value in step S19. When the determination in step S15 is performed on all of the patterns (YES in step S21), the process proceeds to step S23.

In step S23, the pattern selection unit 25 determines whether there is any pattern selected. When there is no pattern selected (NO in step S23), namely, since there is no tire position exchange pattern in which the maximum degree of degradation (Max) is smaller than the reference value, the replacement of the tires or the recycle of the tires is preferably proposed to the user, instead of the positional exchange of the tires. The process proceeds to step S25, and the pattern selection unit 25 then outputs the information as to what the replacement of the tires or the recycle of the tires is proposed, instead of the tire position exchange pattern. The information as to what the replacement of the tires or the recycle of the tires is proposed is output to the display 16 or the external IF 18. The tire position exchange proposal device thus can propose, to the user, the replacement of the tires, or the other option of retreading, regrooving, or re-siding via the display 16 or the external IF 18.

When there is a pattern selected (YES in step S23), the process proceeds to step S27, and the pattern selection unit 25 outputs the selected tire position exchange pattern to the display 16 or the external IF 18. The tire position exchange proposal device thus can propose, to the user, the selected tire position exchange pattern via the display 16 or the external IF 18.

### <Modified Example 1>

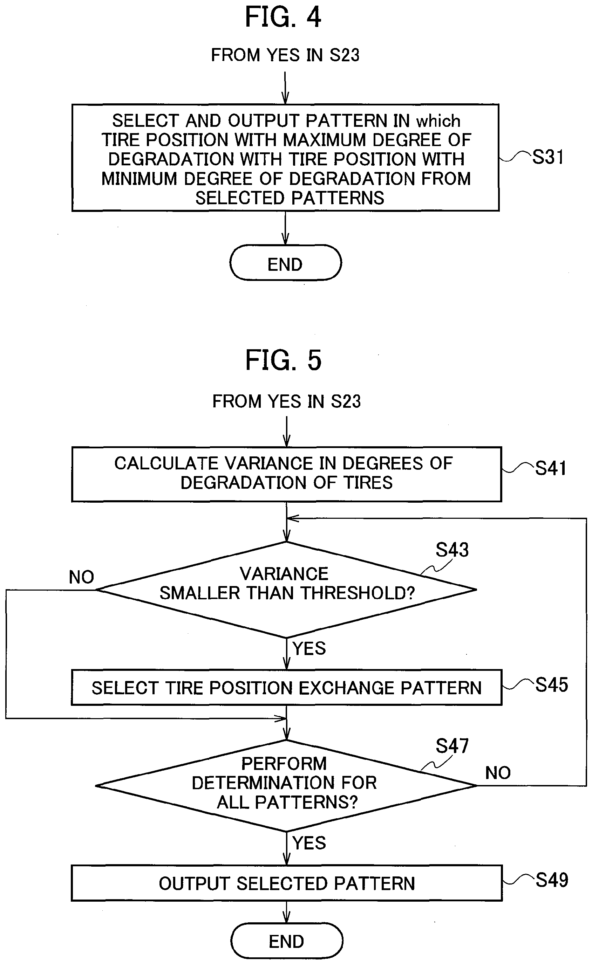

The tire position exchange pattern output in step S27 may be selected in a more specific manner. For example, the step S31 shown in Fig. 4 may be executed instead of step S27. In step S31, the pattern selection unit 25 selects and outputs the tire position exchange pattern in which the positions of the tires having the maximum degree of degradation are exchanged with the positions of the tires having the minimum degree of degradation in the first maintenance period (maintenance 1). For example, pattern 1 shown in Fig. 10 is selected and output.

### <Modified Example 2>

The tire position exchange pattern output in step S27 may be selected in a more specific manner. For example, steps S41 to S49 shown in Fig. 5 may be executed instead of step S27. In step S41, the maximum degradation-degree selection unit 24 calculates the variance in the degrees of degradation of the tires in the second maintenance period (maintenance 2). For example, the maximum degradation-degree selection unit 24 calculates the sum of the absolute values of the differences between the average value of the degrees of degradation of the tires (1 to 8) and the respective degrees of degradation of the tires for each of pattern 1 (Pat1) shown in Fig. 10 and the other tire position exchange patterns (Pat2, Pat3, ...).

The process proceeds to step S43, and the pattern selection unit 25 determines whether the sum of the variances in the degrees of degradation calculated in step S41 is smaller than the threshold. In step S45, the pattern selection unit 25 selects the pattern in which the sum of the variances in the degrees of degradation is smaller than the threshold as the tire position exchange pattern to be proposed to the user. When the determination in step S43 is performed for all of the patterns (YES in step S47), the process proceeds to step S49.

In step S49, the pattern selection unit 25 outputs the tire position exchange pattern selected in step S45 to the display 16 or the external IF 18. The tire position exchange proposal device thus can propose, to the user, the tire position exchange pattern in which the maximum degree of degradation (Max) is smaller than the reference value (YES in step S17), and the sum of the variances in the degrees of degradation is smaller than the threshold (YES in step S43).

### <Second Embodiment>

A second embodiment is illustrated below with a case in which the process in step S01 shown in Fig. 3A is executed by the specific process shown in Fig. 7, instead of the specific process shown in Fig. 6. The specific process shown in Fig. 7 is presumed to be executed when the degree of degradation of the respective tires is the degree of degradation of a casing of the respective tires.

As illustrated in Fig. 7, in step S61, the inclination calculation unit 21 calculates a history of oxygen concentrations of the respective tires in accordance with various kinds of information obtained from the tires. The various kinds of information include the history of pressures and the history of temperatures in the pneumatic chamber during the use of the respective tires, and the history of loads acting on the respective tires. The history of oxygen concentrations includes values of oxygen concentrations of the tires obtained at a predetermined point of time before the first maintenance period (maintenance 1). For example, the history of oxygen concentrations may be calculated by the durability presumption method disclosed in Japanese Patent Application No. 2016-115480 filed June 9, 2016.

The process proceeds to step S63, and the inclination calculation unit 21 calculates the inclination of the degradation degree in accordance with the history of oxygen concentrations. In particular, the inclination calculation unit 21 estimates degradation conditions of the tires in accordance with the history of oxygen concentrations by use of the durability presumption method described above. The inclination calculation unit 21 obtains the degrees of degradation (g1 and g1') of the tire at two different times optionally determined, and calculates the inclination of the degradation degree in accordance with the interval between the two different times and the variation in degradation degree (g1' - g1). The time approximates to the first maintenance period (maintenance 1), so as to improve the accuracy of presumption of the inclination of the degradation degree.

As described above, the embodiments can achieve the following effects.

The tire position exchange pattern in which the maximum degree of degradation of tires is smaller than the reference value in the second maintenance period can be proposed to the user as the tire position exchange pattern to be executed in the first maintenance period. Since the positional exchange (rotation) of the tires conforming to the period of maintenance of the vehicle can be proposed to the user, an increase in downtime of the vehicle can be reduced. In addition, since the tire position exchange pattern in which the maximum degree of degradation of the tires in the second maintenance period is smaller than the reference value is proposed to the user, there is no need to execute the replacement of the tires or the rotation of the tires before the second maintenance period. This also can avoid the increase in downtime of the vehicle. Further, since the advance in degradation can be equalized between the tires, the life of the tires mounted to the vehicle can be entirely extended.

Alternatively, the tire position exchange pattern in which the maximum degree of degradation of the tires in the second maintenance period is the smallest may be proposed to the user. Alternatively, the tire position exchange pattern applied with the preferential order determined sequentially from the smallest maximum degree of degradation in the second maintenance period may be output.

As shown in Fig. 10, the positions (P1 and P2) of the tires, in which the degree of degradation is maximum, are exchanged with the positions (P7 and P8) of the tires, in which the degree of degradation is minimum, in the first maintenance period (maintenance 1). Since the maximum degree of degradation can be decreased in the second maintenance period (maintenance 2), the life of the tires mounted to the vehicle can be entirely extended.

The pattern selection unit 25 selects the tire position exchange pattern to be proposed to the user in which the variance in the degrees of degradation of the tires in the second maintenance period (maintenance 2) is smaller than the threshold, from the tire position exchange patterns in which the maximum degree of degradation is smaller than the reference value. Since the variance in the degrees of degradation of the tires is smaller than the threshold, the life of the tires mounted to the vehicle can be entirely extended. The tire position exchange pattern in which the variance in the degrees of degradation of the tires is the smallest may be output instead. Alternatively, the tire position exchange pattern applied with the preferential order determined sequentially from the smallest variance of degradation in the second maintenance period may be output.

The inclination calculation unit 21 may calculate the inclination of the degradation degree in accordance of the history of pressures and the history of temperatures in the pneumatic chamber during the use of the respective tires for the predetermined evaluation period, as shown in Fig. 6. The inclination of the degradation degree thus can be calculated in accordance with the actual data measured without an increase in calculation load.

The inclination calculation unit 21 may calculate the inclination of the degradation degree in accordance with the history of oxygen concentrations of the tires, as illustrated in Fig. 7. The inclination of the degradation degree of the casing of the respective tires thus can be calculated accurately.

While the present invention has been described above by reference to the above embodiments, it should be understood that the present invention is not intended to be limited to the above descriptions, and various alternatives and modifications will be apparent to those skilled in the art.

The "degradation of tires" encompasses wear of treads of tires, wear of sides of tires, and degradation of casings of tires. The respective embodiments described above can be applied individually to each of the cases of wear of treads of tires, wear of sides of tires, and degradation of casings of tires. The above embodiments can propose an optimum tire position exchange pattern for each of the cases of wear of treads of tires, wear of sides of tires, and casings of tires. Further, the "reference value" described in step S17 can be applied to each of the cases of wear of treads of tires, wear of sides of tires, and degradation of casings of tires, so that retreading, regrooving, or re-siding, in addition to the replacement of tires, can be selectively proposed to the user in step S25. Namely, either the replacement of tires or the recycle of tires can be proposed to the user.

Alternatively, wear of treads of tires, wear of sides of tires, and degradation of casings of tires may be integrated into one degradation so as to apply the above embodiments to the integrated degradation. In this case, each of wear of treads of tires, wear of sides of tires, and degradation of casings of tires may be multiplied by an individual weighting coefficient before integration. This integration can provide a tire position exchange pattern in which not only an advance in degradation is equalized between the respective tires mounted to the vehicle but also an advance in degradation is equalized between the respective elements in the tires such as treads, sides, and casings.

The estimation of wear of treads of tires or wear of sides of tires may use a known method, such as a method disclosed in Japanese Unexamined Patent Application Publication No. H11-326145.

When a spare tire loaded in the vehicle is the same type of tire mounted to a wheel axis of the vehicle and contributing to driving the vehicle, the spare tire can be included in the other tires to be targeted for the rotation. Thus, the "plural tires mounted to the vehicle" as used herein include not only the tires contributing to driving the vehicle but also the spare tire loaded in the vehicle.

The functions described in the respective embodiments may be implemented in one or more processing circuits. A processing circuit includes a programmed processing device such as a processing device including an electric circuit. Such a processing device includes an application-specific integrated circuit (ASIC) configured to execute the functions described in the embodiments or conventional circuit components.

This application is based upon and claims the benefit of priority from Japanese Patent Application No. 2017-042764, filed on March 7, 2017, the entire contents of which are incorporated herein by reference.

### REFERENCE SIGNS LIST

10 CPU (CONTROLLER)
12 MEMORY (STORAGE MEANS)
21 INCLINATION CALCULATION UNIT (VARIATION CALCULATION MEANS)
22 FIRST DEGRADATION-DEGREE CALCULATION UNIT
23 SECOND DEGRADATION-DEGREE CALCULATION UNIT
24 MAXIMUM DEGRADATION-DEGREE SELECTION UNIT
25 PATTERN SELECTION UNIT (PATTERN SELECTION MEANS)
t1 FIRST MAINTENANCE PERIOD
t2 SECOND MAINTENANCE PERIOD
Tr1, Tr2, Tr3, Tr4 TIRE
P1 to P8 MOUNTED POSITION
Pat1, Pat2, Pat3 TIRE POSITION EXCHANGE PATTERN

## Claims

1. A tire position exchange proposal device comprising a memory storing a first maintenance period which is earliest among periods in which maintenance of a vehicle is presumed to be performed and a second maintenance period which is second earliest after the first maintenance period, and a controller,
the controller being configured to:
calculate a variation in degradation degree of a plurality of tires mounted to the vehicle per unit time for individual mounted positions of the tires;
read out the first maintenance period from the memory, and calculate a degree of degradation of the respective tires in the first maintenance period in accordance with the variation in degradation degree;
read out the second maintenance period from the memory, and calculate a degree of degradation of the respective tires in the second maintenance period in accordance with the variation in degradation degree and the degree of degradation of the respective tires in the first maintenance period when a positional exchange of the tires is performed in the first maintenance period;
perform the calculation of the degree of degradation of the respective tires in the second maintenance period for individual tire position exchange patterns;
select a maximum degree of degradation from the degrees of degradation of the tires in the second maintenance period for each of the tire position exchange patterns; and
select a tire position exchange pattern to be proposed to a user in which the maximum degree of degradation is smaller than a reference value, from the plural tire position exchange patterns.

2. The tire position exchange proposal device according to claim 1, wherein the controller selects a tire position exchange pattern to be proposed to the user in which a position of a tire having a greatest degree of degradation is exchanged with a position of a tire having a smallest degree of degradation in the first maintenance period.

3. The tire position exchange proposal device according to claim 1, wherein the controller selects a tire position exchange pattern to be proposed to the user in which a variance in the degrees of degradation of the tires in the second maintenance period is smaller than a threshold, from tire position exchange patterns in which the maximum degree of degradation is smaller than the reference value.

4. The tire position exchange proposal device according to any one of claims 1 to 3, wherein the controller calculates the variation in degradation degree per unit time in accordance with a history of pressures and a history of temperatures in a pneumatic chamber when the respective tires are in use during a predetermined evaluation period.

5. The tire position exchange proposal device according to any one of claims 1 to 3, wherein the controller calculates the variation in degradation degree per unit time in accordance with a history of oxygen concentrations of the tires.

6. A tire position exchange proposal method using a computer comprising a memory storing a first maintenance period which is earliest among periods in which maintenance of a vehicle is presumed to be performed and a second maintenance period which is second earliest after the first maintenance period, the method comprising:
calculating a variation in degradation degree of a plurality of tires mounted to the vehicle per unit time for individual mounted positions of the tires;
reading out the first maintenance period from the memory, and calculating a degree of degradation of the respective tires in the first maintenance period in accordance with the variation in degradation degree;
reading out the second maintenance period from the memory, and calculating a degree of degradation of the respective tires in the second maintenance period in accordance with the variation in degradation degree and the degree of degradation of the respective tires in the first maintenance period when a positional exchange of the tires is performed in the first maintenance period;
performing the calculation of the degree of degradation of the respective tires in the second maintenance period for individual tire position exchange patterns;
selecting a maximum degree of degradation from the degrees of degradation of the tires in the second maintenance period for each of the tire position exchange patterns; and
select a tire position exchange pattern to be proposed to a user in which the maximum degree of degradation is smaller than a reference value, from the plural tire position exchange patterns.
